# EUROPEAN PATENT APPLICATION

(11) **EP 3 511 829 A1**
(43) Date of publication of application: **17.07.2019**
(21) Application number: 17848020.8
(22) Date of filing: 01.08.2017
(51) Int. Cl.: G06F 9/445

(54) **METHOD AND SYSTEM FOR DISABLING NON-DELETABLE APPLICATION IN MOBILE TERMINAL**

(30) Priority: 06.09.2016 CN 201610804602
(71) Applicant: JRD Communication Inc., Shenzhen, Guangdong 518057 (CN)
(72) Inventor: SUN, Jipeng, Shenzhen Guangdong 518057 (CN)
(74) Representative: Patentanwälte Olbricht Buchhold Keulertz
(86) International application number: PCT/CN2017/095516
(87) International publication number: WO 2018/045847

(57) **Abstract**

A method and system for disabling a non-deletable application in a mobile terminal. The method comprises: when a mobile terminal detects that an application icon on the screen is long-pressed, determining whether the application is a non-deletable application or not (S100); when the long-pressed application is a non-deletable application, determining whether the non-deletable application is a system application or not (S200); and popping up a prompt box on the screen to prompt a user to confirm whether to disable the application or not, when the non-deletable application is not a system application but is an application in a preset core application list, and if the user confirms to disable the application, disabling the application and hiding the icon of the application on the screen (S300). According to the method, a prompt box is used for prompting the user whether to disable a non-deletable application in a mobile terminal or not, so that the user can disable undesired and less-usable built-in applications of the mobile terminal, and the user can operate and process the applications conveniently.

## Description

### BACKGROUND

### 1. Field

The present disclosure relates to the technical field of mobile terminals, and in particular to, a mobile phone screenshot method and system based on security prompts.

### 2. Description of Related Art

With rapid development of mobile terminals, there are more and more built-in software (applications) in ex-factory mobile terminals. Take an example of a cellphone that is a most commonly used mobile terminal, cellphone built-in software is also called cellphone pre-installed software, which generally refers to an application or software that is built-in the ex-factory cellphone or pre-installed in the cellphone in a third-party jailbreaking manner, and is non-deletable by consumers themselves. With growing of smartphone market, the built-in software pre-installed in the smartphone has gradually become the biggest threat to the user experience. Moreover, the built-in software pre-installed in the smartphone occupies a large amount capacity of memory in the cellphone, affects operating speed, and uses traffic of the cellphone by stealth.

Currently, most ex-factory smartphones are installed with many applications, which are such as tool software, entertainment software, social software, e-commerce software, security software, learning software, and game software, in addition to system software that is built-in by a manufacturer, third-party application software that is published by the cellphone software developer or in the jailbreaking manner. Such software is pre-installed by the manufacturer of the cellphone, is written into a system of the mobile phone or pre-installed into the users' mobile phone in the jailbreaking manner, and is non-deletable by the consumers. Three conditions for software forced pre-installed in the cellphone are as follows.
(1) Pre-installed before the cellphone leaving the factory:
   The pre-installed before the cellphone leaving the factory refers to that software of the cellphone is pre-installed in the cellphone by the manufacturer and can be used directly after the first boot, in an initial state and an ex-factory configuration defaulted in the cellphone, when a consumer purchases a new, not been opened, and not been used cellphone.
(2) Belonging to third-party applications:
   The software forced pre-installed in the cellphone belongs third-party applications. Firstly, the so-called third-party application excludes functions and programs that are built-in by a cellphone system, such as native album in the system. Secondly, factory service provided by the manufacturer as a part of the overall cellphone, such as an application store, does not belong to the third-party applications.
(3) Unable to be deleted in a normal manner:
   The software forced pre-installed in the cellphone is mandatory because the consumers do not have the right to delete or uninstall. The software is written into firmware of the cellphone, and does not be deleted in a manner of regular uninstallation or even resuming the factory settings unless the cellphone is cracked or jailbreaking.

The pre-installed software has the following two hazards for users.
(1) Affecting system stability and even causing been crashed:
   Firstly, these pre-installed software are installed in the cellphone in a case that the consumer does not know, partly, that violates the consumer's right to know about the product. In addition, such unofficial pre-installed software mostly does not pass stability testing before the software being implanted into system firmware, easily causing hidden dangers to system stability. That will affect usage continuity and cause the system breakdown (crashed).
(2) Difficult to be deleted by users and unapproved to connect to the network:
   Generally, such pre-installed software are directly written into a low level implementation of the system, and users may unable to uninstall the pre-installed software and install other similar software. That is directly violates the consumer's right to use the cellphone. In addition, some pre-installed software has connected to the network by stealth and consumes user's traffic. Except for a few parts of the pre-installed software maliciously connect to the network for data exchanging, much of them perform to update automatically. But, all of that are done without the user's knowledge, and probably will not be detected until high telephone bill is received at the end of a month.

Therefore, in response to the above drawbacks, the prior art has yet to be improved and developed.

### SUMMARY OF THE DISCLOSURE

The technical problem to be solved by the present disclosure is to provide a method and system for disabling a non-deletable application in a mobile terminal aiming at the defects of the prior art, in order to remind a user in a form of a prompt box whether is necessary to disable the non-deletable application in the mobile terminal or not. On one hand, core system applications are not disabled, and on the other hand, the user can disable to deactivate undesired and less-usable built-in applications of the mobile terminal, and hide the application icon on a desktop. It is convenient for the user to operate and process the applications.

A technical solution adopted by the present disclosure to solve technical problems is as follows.

A method for disabling a non-deletable application in a mobile terminal, the method includes:
a step A of determining whether an application is a non-deletable application or not when the mobile terminal detects that an application icon on a screen is long-pressed;
a step B of determining whether the non-deletable application is a system application or not when the long-pressed application is the non-deletable application; and
a step C of popping up a prompt box on the screen to prompt a user to confirm whether to disable the application or not, when the non-deletable application is not the system application but is an application in a preset core application list, if yes, the application is disabled and the application icon on the screen is hidden.

The method for disabling the non-deletable application in the mobile terminal, wherein the step A further includes:
a step A1 of performing a normal deletion process or not performing any operation when the mobile terminal detects that the application icon on the screen is long-pressed and the application is determined to be a general application that is deletable.

The method for disabling the non-deletable application in the mobile terminal, wherein the step B further includes:
a step B1 of not performing a disabling operation when the long-pressed application is the non-deletable application and the non-deletable application is determined to be the system application.

The method for disabling the non-deletable application in the mobile terminal, wherein the step C specifically includes:
a step C1 of making the preset core application list including camera, gallery, security center, calendar, dial, contacts, and short message;
a step C2 of directly clicking a disabling button to disable the application and sending an instruction for hiding the application icon on the screen to a system of the mobile terminal when the non-deletable application is not the system application and the application in the preset core application list; and
a step C3 of popping up the prompt box on the screen configured to prompt a user to confirm whether to disable the application or not, when the non-deletable application is not the system application but is the application in the preset core application list, if yes, the application is disabled and the instruction for hiding the application icon on the screen is sent to the system of the mobile terminal; if no, no operation is performed.

The method for disabling the non-deletable application in the mobile terminal, wherein includes after the step C:
a step D of adding a disabled application list to a disabled application table and storing the disabled application list to a database in the mobile terminal after a disabling operation is completed; and
a step E of clicking any option of the application in the disabled application table and then selecting OK to resume the application, that is, a cancellation for disabling and to redisplay the application on the screen when the disabled application needs to be resumed.

The method for disabling the non-deletable application in the mobile terminal, wherein after the operation of disabling application is completed and the instruction of hiding the application icon on the screen is sent to the system of the mobile terminal, manually refreshes the screen of the mobile terminal in a real time manner to ensure whether the icon of the disabled application is hidden, if the icon of the disabled application is not hidden after the screen is refreshed, then restarting a desktop system to complete the operation.

A system for disabling a non-deletable application in a mobile terminal, the system includes:
a first determination module configured to determine whether an application is a non-deletable application or not when the mobile terminal detects that an application icon on a screen is long-pressed;
a second determination module configured to determine whether the non-deletable application is a system application or not when the long-pressed application is the non-deletable application;
an application disabling module configured to pop up a prompt box on the screen to prompt a user to confirm whether to disable the application or not, when the non-deletable application is not the system application but is an application in a preset core application list, if yes, the application is disabled and the application icon on the screen is hidden;
a disabled application storing module configured to add a disabled application list to a disabled application table and to store the disabled application list to a database in the mobile terminal, after a disabling operation is completed; and
an application resuming module configured to click any option of the application in the disabled application table, then to select OK to resume the application, that is, a cancellation for disabling and to redisplay the application on the screen when the disabled application needs to be resumed.

In the system for disabling the non-deletable application in the mobile terminal, wherein the first determination module further includes:
a general application operation unit configured to perform a normal deletion process or does not perform an operation when the mobile terminal detects that the application icon on the screen is long-pressed and the application is determined to be a general application that is deletable.

In the system for disabling the non-deletable application in the mobile terminal, wherein the second determination module includes:
a system application operation unit configured to does not perform a disabling operation when the long-pressed application is the non-deletable application and the non-deletable application is determined to be the system application.

In the system for disabling the non-deletable application in the mobile terminal, wherein the application disabling module specifically includes:
a preset unit configured to make the preset core application list comprising camera, gallery, security center, calendar, dial, contacts, and short message;
a first disabling unit configured to directly click a disabling button to disable the application and to send an instruction for hiding the application icon on the screen to a system of the mobile terminal when the non-deletable application is not the system application and the application in the preset core application list; and
a second disabling unit configured to pop up the prompt box on the screen configured to prompt a user to confirm whether to disable the application or not, when the non-deletable application is not the system application but is the application in the preset core application list, if yes, the application is disabled and the instruction for hiding the application icon on the screen is sent to the system of the mobile terminal; if no, no operation is performed.

In the system for disabling the non-deletable application in the mobile terminal, wherein after the operation of disabling application is completed and the instruction of hiding the application icon on the screen is sent to the system of the mobile terminal, manually refreshes the screen of the mobile terminal in a real time manner to ensure whether the icon of the disabled application is hidden, if the icon of the disabled application is not hidden after the screen is refreshed, then restarting a desktop system to complete the hidden operation.

The present disclosure discloses a method and system for disabling the non-deletable application in the mobile terminal, the method includes:
a step A of determining whether an application is a non-deletable application or not when the mobile terminal detects that an application icon on a screen is long-pressed;
a step B of determining whether the non-deletable application is a system application or not when the long-pressed application is the non-deletable application; and
a step C of popping up a prompt box on the screen to prompt a user to confirm whether to disable the application or not, when the non-deletable application is not the system application but is an application in a preset core application list, if yes, the application is disabled and the application icon on the screen is hidden. The present disclosure is to remind a user in a form of a prompt box whether is necessary to disable the non-deletable application in the mobile terminal or not. On one hand, core system applications are not disabled, and on the other hand, the user can disable to deactivate undesired and less-usable built-in applications of the mobile terminal, and hide the application icon on the desktop. It is convenient for the user to operate and process the applications.

### BRIEF DESCRIPTION OF THE DRAWINGS

FIG. 1 is a flowchart of a preferred embodiment of a method for disabling a non-deletable application in a mobile terminal according to the present disclosure.
FIG. 2 is a flowchart of a specific embodiment of the method for disabling the non-deletable application in the mobile terminal according to the present disclosure.
FIG. 3 is a functional block diagram of a preferred embodiment of a system for disabling a non-deletable application in a mobile terminal according to the present disclosure.

### DETAILED DESCRIPTION OF THE PREFERRED EMBODIMENTS

The present disclosure will be further described in detail below with reference to the accompanying drawings and embodiments. It is understood that the specific embodiments described herein are merely illustrative of the present disclosure and are not intended to limit the present disclosure.

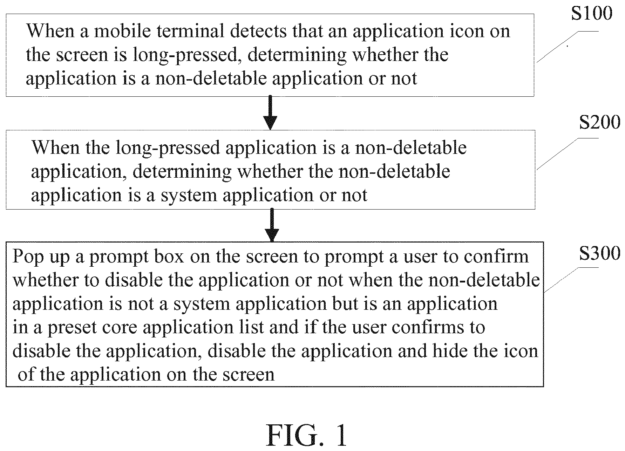

Please refer to FIG. 1, which is a flowchart of a preferred embodiment of a method for disabling a non-deletable application in a mobile terminal according to the present disclosure.

As shown in FIG. 1, one embodiment of the present disclosure provides a method for disabling the non-deletable application in the mobile terminal, wherein the method includes steps as follows.

A step S100 of determining whether an application is a non-deletable application or not when the mobile terminal detects that an application icon on a screen is long-pressed.

In the present disclosure, if the user usually feels that someone application in the mobile terminal is less-usable, or the user wants to change to a similar application software in the mobile terminal, the user generally uninstalls the application, that is, deletes the application. The deletion method is long-pressed the application need to delete by the finger. Basically, most applications on the screen can be deleted in this way, but this way does not delete the application that is built in the mobile terminal before leaving the factory. Therefore, when a mobile terminal detects that an application icon on the screen is long-pressed, it is firstly to determine whether the application is the non-deletable application or not.

The step S100 further includes: a step of performing a normal deletion process or not performing any operation when the mobile terminal detects that the application icon on the screen is long-pressed and the application is determined to be a general application that is deletable.

A step S200 of determining whether the non-deletable application is a system application or not when the long-pressed application is the non-deletable application.

In the present disclosure, when a deleting option is not displayed by long-pressing the application icon on the screen, it is proven that the application is a non-deletable application. But, the non-deletable application may be system applications of the mobile terminal, and the system applications generally support some basic functions of the mobile terminal. If these applications are disabled, the user is very inconvenient to use, so the system applications are not disabled. Therefore, when the long-pressed application is the non-deletable application, it is determined whether the non-deletable application is a system application or not. When the long-pressed application is the non-deletable application and the non-deletable application is determined to be the system application, no disabling operation is performed to prevent the basic functions of the mobile terminal from disappearing.

A step S300 of popping up a prompt box on the screen to prompt a user to confirm whether to disable the application or not, when the non-deletable application is not the system application but is an application in a preset core application list, if yes, the application is disabled and the application icon on the screen is hidden.

In the present disclosure, the step S300 specifically includes:
a step of making the preset core application list includes camera, gallery, security center, calendar, dial, contacts, and short message, certainly, the user can then add other applications considered more important to the core application list in a system configuration, and also remove the applications added in the core application list, that is, the user can update the core application list in real time;
a step of directly clicking a disabling button to disable the application and sending an instruction for hiding the application icon on the screen to a system of the mobile terminal when the non-deletable application is not the system application and the application in the preset core application list.
a step of popping up the prompt box on the screen configured to prompt a user to confirm whether to disable the application or not, when the non-deletable application is not the system application but is the application in the preset core application list, if yes, the application is disabled and the instruction for hiding the application icon on the screen is sent to the system of the mobile terminal, because the application in the preset core application list is treated carefully by the user, the prompt box is convenient for the user to perform a selection; if no, no operation is then performed.

After the step S300, further includes:
a step of adding a disabled application list to a disabled application table and storing the disabled application list to a database in the mobile terminal after a disabling operation is completed; and
a step of clicking any option of the application in the disabled application table and then selecting OK to resume the application, that is, a cancellation for disabling and to redisplay the application on the screen when the disabled application needs to be resumed.

After the operation of disabling application is completed and the instruction of hiding the application icon on the screen is sent to the system of the mobile terminal, manually refreshes the screen of the mobile terminal in a real time manner to ensure whether the icon of the disabled application is hidden, if the icon of the disabled application is not hidden after the screen is refreshed, then restarting a desktop system to complete the operation.

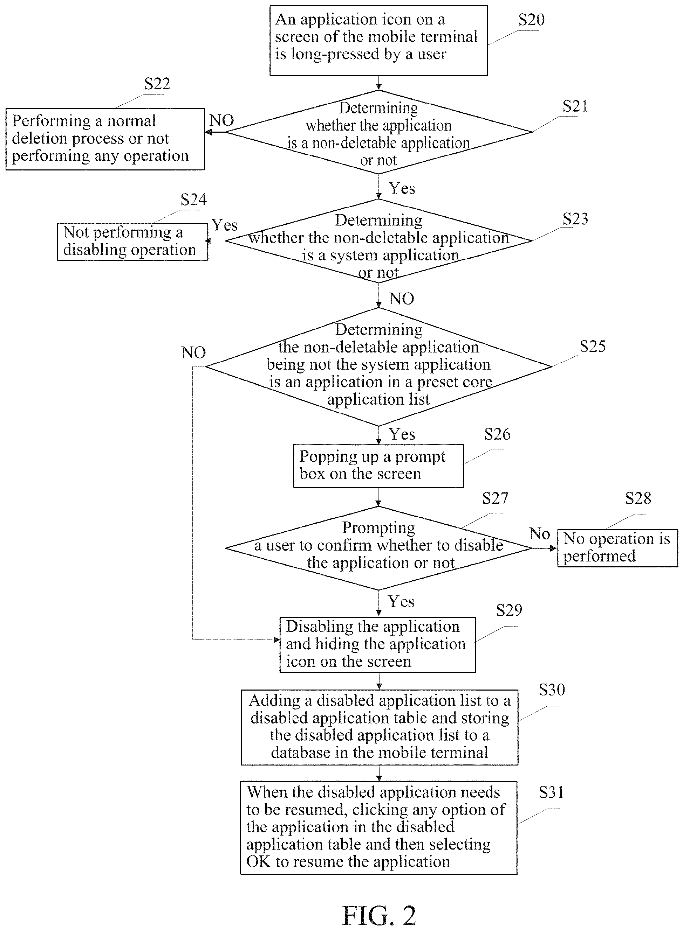

In order to make the method for disabling the non-deletable application in the mobile terminal according to the present disclosure more clearer, the flow of the specific embodiment is given below. Please refer to FIG. 2, which is a flowchart of a specific embodiment of the method for disabling the non-deletable application in the mobile terminal according to the present disclosure.

As shown in FIG. 2, the flow of the specific embodiment includes:
a step S20 of that an application icon on a screen of the mobile terminal is long-pressed by a user;
a step S21 of determining whether the application is a non-deletable application or not when the mobile terminal detects that the application icon on the screen is long-pressed;
a step S22 of performing a normal deletion process or not performing any operation when the mobile terminal detects that the application is determined to be a general application that is deletable;
a step S23 of determining whether the non-deletable application is a system application or not when the long-pressed application is the non-deletable application;
a step S24 of not performing a disabling operation when the long-pressed application is the non-deletable application and the non-deletable application is determined to be the system application;
a step S25 of determining the non-deletable application being not the system application is an application in a preset core application list, if no, a step S29 is executed; if yes, a step S26 is executed;
the step S26 of popping up a prompt box on the screen when the non-deletable application is not the system application, but is the application in the preset core application list;
a step S27 of prompting a user to confirm whether to disable the application or not;
a step S28 of that if no, no operation is performed;
the step S29 of disabling the application and hiding the application icon on the screen;
a step S30 of adding a disabled application list to a disabled application table and storing the disabled application list to a database in the mobile terminal after a disabling operation is completed;
a step S31 of clicking any option of the application in the disabled application table and then selecting OK to resume the application, that is, a cancellation for disabling and to redisplay the application on the screen when the disabled application needs to be resumed.

It can be seen from the embodiment of the foregoing execution flow that the present disclosure can not only disable the non-deletable application, but also prompt the user to avoid disabling the system applications and the core applications, and can also resume them after disabling. It brings great convenience for the user to manage the applications.

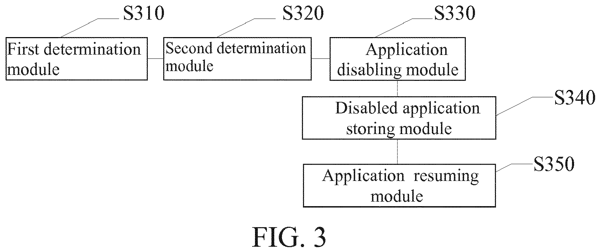

Based on the above embodiment, the present disclosure further provides a system for disabling a non-deletable application in a mobile terminal. Please refer to FIG. 3, which is a functional block diagram of a preferred embodiment of the system for disabling the non-deletable application in the mobile terminal according to the present disclosure.

As shown in FIG. 3, the system includes:
a first determination module 310 is configured to determine whether an application is a non-deletable application or not when the mobile terminal detects that an application icon on a screen is long-pressed; and that is specifically described as above.
a second determination module 320 is configured to determine whether the non-deletable application is a system application or not when the long-pressed application is the non-deletable application; and that is specifically described as above.
an application disabling module 330 is configured to pop up a prompt box on the screen to prompt a user to confirm whether to disable the application or not, when the non-deletable application is not the system application but is an application in a preset core application list, if yes, the application is disabled and the application icon on the screen is hidden; and that is specifically described as above.
a disabled application storing module 340 is configured to add a disabled application list to a disabled application table and to store the disabled application list to a database in the mobile terminal, after a disabling operation is completed; and that is specifically described as above.
an application resuming module 350 is configured to click any option of the application in the disabled application table, then to select OK to resume the application, that is, a cancellation for disabling and to redisplay the application on the screen when the disabled application needs to be resumed; and that is specifically described as above.

Further, in the system for disabling the non-deletable application in the mobile terminal, wherein the first determination module further includes:
a general application operation unit configured to perform a normal deletion process or does not perform an operation when the mobile terminal detects that the application icon on the screen is long-pressed and the application is determined to be a general application that is deletable; and that is specifically described as above.

In the system for disabling the non-deletable application in the mobile terminal, wherein the second determination module includes:
a system application operation unit configured to does not perform a disabling operation when the long-pressed application is the non-deletable application and the non-deletable application is determined to be the system application; and that is specifically described as above.

In the system for disabling the non-deletable application in the mobile terminal, wherein the application disabling module specifically includes:
a preset unit configured to make the preset core application list including camera, gallery, security center, calendar, dial, contacts, and short message;
a first disabling unit configured to directly click a disabling button to disable the application and to send an instruction for hiding the application icon on the screen to a system of the mobile terminal when the non-deletable application is not the system application and the application in the preset core application list; and
a second disabling unit configured to pop up the prompt box on the screen configured to prompt a user to confirm whether to disable the application or not, when the non-deletable application is not the system application but is to the application in the preset core application list, if yes, the application is disabled and the instruction for hiding the application icon on the screen is sent to the system of the mobile terminal; if no, no operation is performed.

In summary, the present disclosure discloses a method and system for disabling a non-deletable application in a mobile terminal. The method includes steps of determining whether an application is a non-deletable application or not when the mobile terminal detects that an application icon on a screen is long-pressed; determining whether the non-deletable application is a system application or not when the long-pressed application is the non-deletable application; and popping up a prompt box on the screen to prompt a user to confirm whether to disable the application or not, when the non-deletable application is not the system application but is an application in a preset core application list, if yes, the application is disabled and the application icon on the screen is hidden. The present disclosure is to remind a user in a form of a prompt box whether is necessary to disable the non-deletable application in a mobile terminal or not. On one hand, core system applications are not disabled, and on the other hand, the user can disable to deactivate undesired and less-usable built-in applications of the mobile terminal, and hide the application icon on a desktop. It is convenient for the user to operate and process the applications.

Certainly, a person skilled in the art can understand that all or a part of the processes of implementing the foregoing embodiment method can be completed by a computer program to instruct related hardware (such as a processor, a controller, or the like). The program may be stored in a computer readable storing medium, and the program may include the processes of the method embodiments as described above when the program is executed. The storing medium may be a memory, a magnetic disk, an optical disk, or the like.

It should be understood that, the application of the present disclosure is not limited to the above-described examples, and those skilled in the art can make modifications or changes according to the above description, all of the modifications or changes are within a scope of claims appended to the present disclosure.

## Claims

1. A method for disabling a non-deletable application in a mobile terminal, comprising:
a step A of determining whether an application is a non-deletable application or not when the mobile terminal detects that an application icon on a screen is long-pressed;
a step B of determining whether the non-deletable application is a system application or not when the long-pressed application is the non-deletable application; and
a step C of popping up a prompt box on the screen to prompt a user to confirm whether to disable the application or not, when the non-deletable application is not the system application but is an application in a preset core application list, if yes, the application is disabled and the application icon on the screen is hidden.

2. The method for disabling the non-deletable application in the mobile terminal as claimed in claim 1, wherein the step A further comprises:
a step A1 of performing a normal deletion process or not performing any operation when the mobile terminal detects that the application icon on the screen is long-pressed and the application is determined to be a general application that is deletable.

3. The method for disabling the non-deletable application in the mobile terminal as claimed in claim 1, wherein the step B further comprises:
a step B1 of not performing a disabling operation when the long-pressed application is the non-deletable application and the non-deletable application is determined to be the system application.

4. The method for disabling the non-deletable application in the mobile terminal as claimed in claim 1, wherein the step C specifically comprises:
a step C1 of making the preset core application list comprising camera, gallery, security center, calendar, dial, contacts, and short message;
a step C2 of directly clicking a disabling button to disable the application and sending an instruction for hiding the application icon on the screen to a system of the mobile terminal when the non-deletable application is not the system application and the application in the preset core application list; and
a step C3 of popping up the prompt box on the screen configured to prompt a user to confirm whether to disable the application or not, when the non-deletable application is not the system application but is the application in the preset core application list, if yes, the application is disabled and the instruction for hiding the application icon on the screen is sent to the system of the mobile terminal; if no, no operation is performed.

5. The method for disabling the non-deletable application in the mobile terminal as claimed in claim 1, wherein comprises after the step C:
a step D of adding a disabled application list to a disabled application table and storing the disabled application list to a database in the mobile terminal after a disabling operation is completed; and
a step E of clicking any option of the application in the disabled application table and then selecting OK to resume the application, that is, a cancellation for disabling and to redisplay the application on the screen when the disabled application needs to be resumed.

6. The method for disabling the non-deletable application in the mobile terminal as claimed in claim 4, wherein after the operation of disabling application is completed and the instruction of hiding the application icon on the screen is sent to the system of the mobile terminal, manually refreshes the screen of the mobile terminal in a real time manner to ensure whether the icon of the disabled application is hidden, if the icon of the disabled application is not hidden after the screen is refreshed, then restarting a desktop system to complete the operation.

7. The method for disabling the non-deletable application in the mobile terminal as claimed in claim 2, wherein the step B further comprises:
a step B1 of not performing a disabling operation when the long-pressed application is the non-deletable application and the non-deletable application is determined to be the system application.

8. The method for disabling the non-deletable application in the mobile terminal as claimed in claim 7, wherein the step C specifically comprises:
a step C1 of having the preset core application list comprising camera, gallery, security center, calendar, dial, contacts, and short message;
a step C2 of directly clicking a disabling button to disable the application and sending an instruction for hiding the application icon on the screen to a system of the mobile terminal when the non-deletable application is not the system application and the application in the preset core application list; and
a step C3 of popping up the prompt box on the screen configured to prompt a user to confirm whether to disable the application or not, when the non-deletable application is not the system application but is the application in the preset core application list, if yes, the application is disabled and the instruction for hiding the application icon on the screen is sent to the system of the mobile terminal; if no, no operation is performed.

9. The method for disabling the non-deletable application in the mobile terminal as claimed in claim 8, wherein that comprises after the step C:
a step D of adding a disabled application list to a disabled application table and storing the disabled application list to a database in the mobile terminal after an operation for disabling is completed; and
a step E of clicking any option of the application in the disabled application table and then selecting OK to resume the application, that is, a cancellation for disabling and to redisplay the application on the screen when the disabled application needs to resume.

10. The method for disabling the non-deletable application in the mobile terminal as claimed in claim 9, wherein after the operation of disabling application is completed and the instruction of hiding the application icon on the screen is sent to the system of the mobile terminal, manually refreshes the screen of the mobile terminal in a real time manner to ensure whether the icon of the disabled application is hidden, if the icon of the disabled application is not hidden after the screen is refreshed, then restarting a desktop system to complete the hidden operation.

11. A system for disabling a non-deletable application in a mobile terminal, comprising:
a first determination module configured to determine whether an application is a non-deletable application or not when the mobile terminal detects that an application icon on a screen is long-pressed;
a second determination module configured to determine whether the non-deletable application is a system application or not when the long-pressed application is the non-deletable application;
an application disabling module configured to pop up a prompt box on the screen to prompt a user to confirm whether to disable the application or not, when the non-deletable application is not the system application but is an application in a preset core application list, if yes, the application is disabled and the application icon on the screen is hidden;
a disabled application storing module configured to add a disabled application list to a disabled application table and to store the disabled application list to a database in the mobile terminal, after a disabling operation is completed; and
an application resuming module configured to click any option of the application in the disabled application table, then to select OK to resume the application, that is, a cancellation for disabling and to redisplay the application on the screen when the disabled application needs to be resumed;
wherein the first determination module first determination module further comprises a general application operation unit configured to perform a normal deletion process or does not perform an operation when the mobile terminal detects the application icon on the screen is long-pressed and the application is determined to be a general application that is deletable; and
wherein the second determination module comprises a system application operation unit configured to does not perform a disabling operation when the long-pressed application is the non-deletable application and the non-deletable application is determined to be the system application.

12. The system for disabling the non-deletable application in the mobile terminal as claimed in claim 11, wherein the application disabling module comprises:
a preset unit configured to make the preset core application list comprising camera, gallery, security center, calendar, dial, contacts, and short message;
a first disabling unit configured to directly click a disabling button to disable the application and to send an instruction for hiding the application icon on the screen to a system of the mobile terminal when the non-deletable application is not the system application and the application in the preset core application list; and
a second disabling unit configured to pop up the prompt box on the screen configured to prompt a user to confirm whether to disable the application or not, when the non-deletable application is not the system application but is the application in the preset core application list, if yes, the application is disabled and the instruction for hiding the application icon on the screen is sent to the system of the mobile terminal; if no, no operation is performed.

13. A system for disabling a non-deletable application in a mobile terminal, comprising:
a first determination module configured to determine whether an application is a non-deletable application or not when the mobile terminal detects that an application icon on a screen is long-pressed;
a second determination module configured to determine whether the non-deletable application is a system application or not when the long-pressed application is the non-deletable application;
an application disabling module configured to pop up a prompt box on the screen to prompt a user to confirm whether to disable the application or not, when the non-deletable application is not the system application but is an application in a preset core application list, if yes, the application is disabled and the application icon on the screen is hidden;
a disabled application storing module configured to add a disabled application list to a disabled application table and to store the disabled application list to a database in the mobile terminal, after a disabling operation is completed; and
an application resuming module configured to click any option of the application in the disabled application table, then to select OK to resume the application, that is, a cancellation for disabling and to redisplay the application on the screen when the disabled application needs to be resumed.

14. The system for disabling the non-deletable application in the mobile terminal as claimed in claim 13, wherein the first determination module further comprises:
a general application operation unit configured to perform a normal deletion process or does not perform an operation when the mobile terminal detects that the application icon on the screen is long-pressed and the application is determined to be a general application that is deletable.

15. The system for disabling the non-deletable application in the mobile terminal as claimed in claim 13, wherein the second determination module comprises:
a system application operation unit configured to does not perform a disabling operation when the long-pressed application is the non-deletable application and the non-deletable application is determined to be the system application.

16. The system for disabling the non-deletable application in the mobile terminal as claimed in claim 13, wherein the application disabling module specifically comprises:
a preset unit configured to make the preset core application list comprising camera, gallery, security center, calendar, dial, contacts, and short message;
a first disabling unit configured to directly click a disabling button to disable the application and to send an instruction for hiding the application icon on the screen to a system of the mobile terminal when the non-deletable application is not the system application and the application in the preset core application list; and
a second disabling unit configured to pop up the prompt box on the screen configured to prompt a user to confirm whether to disable the application or not, when the non-deletable application is not the system application but is the application in the preset core application list, if yes, the application is disabled and the instruction for hiding the application icon on the screen is sent to the system of the mobile terminal; if no, no operation is performed.
